# EUROPEAN PATENT SPECIFICATION

(11) **EP 2 597 165 B1**
(45) Date of publication and mention of the grant of the patent: **03.09.2014**
(21) Application number: 11190836.4
(22) Date of filing: 25.11.2011
(51) Int. Cl.: C22B 34/34, C21C 5/52, C22C 35/00, B23K 35/40

(54) **Iron and molybdenum containing pellets**
Eisen- und molybdänhaltige Pellets
Fer et molybdène contenant des granules

(43) Date of publication of application: 29.05.2013
(73) Proprietor: AB Ferrolegeringar, 103 88 Stockholm (SE)
(72) Inventor: Arvidsson, Johan, 260 41 NYHAMNSLÄGE (SE)
(74) Representative: Johansson, Lars E.

(56) References cited:
- DE-A1- 19 622 097
- US-A- 3 865 573
- US-A- 4 039 325
- US-A- 4 045 216
- US-A1- 2003 106 395

## Description

### TECHNICAL FIELD

The present invention relates to a process for producing an iron and molybdenum containing pellet and an iron and molybdenum containing pellet.

### BACKGROUND

Ferromolybdenum is an iron molybdenum alloy normally having a molybdenum content of 60-80 % by weight.

In most commercial applications ferromolybdenum is produced from molybdenum trioxide (MoO3) by a carbothermic reduction, an aluminothermic reduction, or a silicothermic reduction. The carbothermic process produces a high carbon ferromolybdenum, while the latter produces a low carbon ferromolybdenum. Low carbon ferromolybdenum is more common than the high carbon alloy, and hence more sought after. Lumps of ferromolybdenum produced by these methods normally have densities around 9 g/cm³. Dissolving the lumps in the steel melt is can be difficult due to the high melting point of the lumps, for instance the commercial grade FeMo70 has a melting point of 1950 °C, and since the temperature of the steel melt is considerably lower, dissolution of the ferromolybdenum is mainly affected by diffusions processes which prolong the dissolution time of the ferromolybdenum.Another factor is the high cost of raw materials in the aluminothermic reduction and silicothermic reductions. Furthermore, around 2 % of the Mo can be lost in the slag in these processes.

In DE 196 22 097, a homogenous ferromolybdenum powder with 60-80 % Mo is produced by mixing fine grained molybdenum trioxide and fine grained iron oxide and reducing the mix in hydrogen gas. The obtained ferromolybdenum powder is thereafter briquetted by using a binding agent such as water glass. The briquettes have a density of 3.5 g/cm3. One disadvantage with this process is that hydrogen is expensive and can be difficult to handle in a safe manner. Furthermore the compaction step adds to the costs. Another disadvantage is that the briquettes may shred into smaller pieces when handled.

US 3 865 573 disclose a process for producing ferromolybdenum briquettes by reducing a mixture of molybdenum oxide and iron oxide in a two step reduction process using a gaseous reducing agent.

US2003106395 disclose porous agglomerates containing iron and molybdenum and a method for producing the agglomerates. The agglomerates are produced by reducing a powder mixture of molybdenum oxide and iron oxide in a hydrogen atmosphere. The reduced mixture is compacted in a compacting press and in absence of binding agents, to form agglomerates. The formed agglomerates are thereafter sintered.

A ferromolybdenum in the form of a hexagonally shaped briquette has been sold by Treibacher Industrie AG under the trademark MOLYQUICK®. The briquette have a density of 5 g/cm3, molybdenum content of 70 % by weight and balance iron, and a size of around 50mm. The assignee of US2003106395 is Treibacher Industrie AG and the application corresponds to this product.

### OBJECTS OF THE INVENTION

It is an object of the invention provide a novel iron and molybdenum containing material suitable for alloying with molybdenum in steel melts, and a process for producing such an material in a comparably cost efficient manner.

A further object is to provide a novel iron and molybdenum containing material low in carbon and high in Mo, and a process for producing such an material in a comparably cost efficient manner.

### DESCRIPTION OF THE INVENTION

At least one of the above mentioned objects is at least to some extent achieved by a process for producing an iron- and/or molybdenum containing pellets including the steps of:
a) mixing an iron containing powder, a molybdenum oxide powder, a carbonaceous powder,
b) adding a liquid and optionally a binder to the mixture of step a) and pelletizing to provide a plurality of green pellets;
c) drying the green pellets to reduce the moisture content to less than 10 % by weight;
d) optionally heat-treating the green body pellets derived from step c) at a temperature in the range of 400-800 °C during at least 0.5 hours,
e) reducing the green pellets derived from step c) or d) at a temperature in the range of 800-1500 °C, preferably 800-1200 °C, during at least 0.5 hours, to produce iron and molybdenum containing pellets having geometric densities in the range of 2-5 g/cm3 and consisting of in weight %: 2-25 Fe, less than 10 O, less than 5 C, less than 15 of other elements besides Mo, Fe, C and O, and balance at least 60 % by weight of Mo.

This process can be used to produce iron- and/or molybdenum containing pellets that may substitute traditionally manufactured ferromolybdenum alloys, when alloying with molybdenum in steel production. The iron- and/or molybdenum containing pellets can be produced at lower costs than standard grades of ferromolybdenum. Furthermore, the process can provide iron and molybdenum containing pellets that dissolve quicker than standard grades of ferromolybdenum.

By drying the green pellets to a moisture content less than 10 % by weight, the risk of cracking the pellets, due to quick vaporisation of the liquid in the pellets during the optional step d) and step e), is minimised. Preferably the pellets are dried to have a moisture content less than 5 % by weight, more preferably less than 3 % by weight.

The green pellets are surprisingly strong, in the example below the green pellets had a compression strength around 450 - 500 N/cm² and they are therefore not required to be compacted at all before, during or after the reduction. The iron containing powder seems to act as binding agent when mixed in wet condition. For this reason there is no need to have additional binders. Therefore it is an optional step to add a binder.

The relative amount of molybdenum oxide powder and iron containing powder are chosen so that the desired composition is achieved. The relative amount depends on purity of the powders. Vapour losses of Mo, if any, may also be taken into consideration. Preferably the molybdenum oxide powder is a molybdenum trioxide powder.

Typically the amount of carbonaceous powder is chosen to reduce the oxygen content in the pellets to 0-10 % by weight while keeping the carbon content lower than 5 C. Most of the molybdenum oxide is reduced to Mo and the majority of remaining oxides are oxides that are difficult to reduce with carbon. However, in some applications the oxygen content can be allowed to be up to 25 % by weight by only partially reducing the molybdenum oxide powder to MoOₓ, 0.5 < x ≤2

Depending on purity of the iron containing powder and the molybdenum oxide powder, the powders may contain oxides that are difficult to reduce. Other element apart from Mo, Fe, C and O may be allowed up to 15 % by weight. The amount of such elements are mainly determined by the purity of the molybdenum oxide powder, but may also come from impurities in the iron containing powder, the carbonaceous powder, and from reactions with elements in the surrounding atmosphere during heating, reduction, or cooling.

In the process the main reduction reactions are:
(1) C+ CO2(g) → 2CO (g)
(2) MoO3+ C/CO(g) → MoO2 + CO(g)/CO2(g)
(3) MoO2+ C/CO(g) → MoO + CO(g)/CO2(g)
(4) MoO + C/CO(g) → Mo + CO(g)/CO2(g)

The process is endothermic and requires heat. To reduce the amount required external heat, oxygen gas or air can be provided to react with the formed carbon monoxide to form carbon dioxide gas. If air is used the nitrogen uptake of the pellets may increase. Using oxygen the nitrogen uptake during the heating and the reduction step can be minimised.

When pelletizing the liquid is preferably water.

Preferably, in a step f) cooling the reduced pellets in a non-oxidising atmosphere (e.g. reducing or inert) to a temperature below 200 °C to avoid re-oxidation of the pellets, more preferably below 150 °C in an inert atmosphere. The atmosphere may e.g. be a 95 vol-% N2 and 5 vol-% H2 atmosphere. If it is desirable to have very low levels of nitrogen, the pellets may be cooled in a nitrogen free atmosphere such as for example an argon gas atmosphere.

Optionally a step g) crushing or grinding the pellets to a iron and molybdenum containing powder, preferably said powder having particle size wherein at least 90 % by weight, more preferably at least 99 % by weight, of the particles pass through a test sieve in accordance to ISO 3310-1:2000 having nominal aperture sizes of 250 µm, more preferably 125 µm, most preferably 45 µm.

Optionally a step h) providing cored wire including a metal sheet, and a core made of the molybdenum containing powder. The cored wire can be a welding cored wire for welding applications or an injection cored wire for injection alloying applications.

Preferably, the heat treating step d) and the reduction step e) are performed at 0.8-1.2 bar, more preferably at atmospheric pressure.

Preferably the reduction in step e) is performed during 0.5 - 10 hours, preferably 0.5-4 hours, more preferably 0.5 - 3 hours, most preferably 0.5-2 hours.

Preferably, the optional heat treating step d) is performed not more than 2 hours, preferably less than 1 hour. The optional heat treating step is for minimising vapour losses of Mo by reducing most of the MoO3 to MoO2 at a lower temperature. Therefore it is also preferred that the temperature in the optional heat treating step d) is lower than 700 °C.

The atmospheres surrounding the pellets are kept reducing during the optional heat-treating step and the reduction step.

The optional heat treating step can be performed in the same furnace as the reduction step, or alternatively it would be possible to transfer the heat treated green pellets to another furnace for the reduction step.

Suitable furnace types for the optional heat treatment step and the reduction step are for example rotary kilns, rotary heart furnaces, shaft furnaces, grate kilns, travelling grate kilns, tunnel furnaces or batch furnaces. Other kinds of furnaces used in solid state direct reduction of metal oxides may also be employed.

In a preferred embodiment a rotary kiln is used to reduce the pellets. In a rotary kiln furnace the green body pellets from step c) or d) are fed to a rotary kiln rotating on a slightly inclined horizontal axis, and propagated from an inlet of the kiln towards an outlet of the kiln, as the kiln is rotated about its axis. Preferably a first section of the kiln provides a temperature zone in the range of 400-800 °C in which at least a significant part of MoO3 in the green body pellets is reduced by the carbonaceous powder to MoO2, and a second section downstream the first section provides a temperature zone in the range of 800-1500 °C in which a significant part of remaining molybdenum oxides are reduced by the remaining carbonaceous powder to MoO and/or Mo.

Another object is at least partly achieved by an iron molybdenum containing pellet having an geometric density of 2-4 g/cm3 and consisting of in weight%: 2-25 Fe, less than 10 O, less than 5 C, less than 15 of other elements besides O, C, Mo and Fe, and balance at least 60 % by weight of Mo.

Such iron and molybdenum containing pellets may substitute traditionally manufactured ferromolybdenum alloys, when alloying with molybdenum in steel production. The iron and molybdenum containing pellets can be produced at lower costs than standard grades of ferromolybdenum. Furthermore, due to its porous structure the iron and molybdenum containing pellets dissolves quicker than standard grades of ferromolybdenum.

By controlling the amount of carbonaceous powder iron and molybdenum containing pellets can be made with desired carbon content such as less than 1 or 0.5 C. Preferably less than 0.1wt%, and most preferably less than 0.05 or even 0.01 wt%. Such pellets can e.g. be used when alloying low carbon steels.

Another advantage it that iron and molybdenum containing pellets due to there spherical or spheriodal shape are less likely to shred when handled, when compared to briquettes which typically have sharp edges. Thus losses due to shredding can be minimised. Furthermore, their shape also provides for better flow properties compared to e.g. briquettes.

The pellets may be ground to an iron and molybdenum containing powder. According to one embodiment the iron and molybdenum containing powder can be provided as the core of a cored wire for injection alloying or welding application. Such wires typically consist of a metal sheet and a powder core. In injection alloying the metal sheet may be surrounded by a wrapping, e.g. of paper. The diameter of the wires, the thickness of the metal sheet, the kind of metal used in the metal sheet and the particle size of the powder is suitably be adapted for the particular application.

### Molybdenum oxide powder

The molybdenum oxide powder is preferably a molybdenum trioxide powder. The powder may also be a molybdenum dioxide powder or a mix of molybdenum trioxide powder and molybdenum dioxide powders.

The molybdenum powder should include 50-80 % of Mo, the remaining elements being oxygen and impurities. The more pure the grade of MoO3 is the purer the iron and molybdenum containing pellets can be made. However, purer grades of MoO3 are on the other hand more expensive.

Preferably at least 90 % by weight, more preferably at least 99 % by weight, of the particles of the molybdenum oxide powder pass through a test sieve in accordance to ISO 3310-1:2000 having nominal aperture sizes of 250 µm, more preferably 125 µm, most preferably 45 µm.

### Iron containing powder

The iron containing powder is preferably an iron powder containing at least 80 wt% Fe, preferably at least 90 wt% Fe, more preferably at least 95 wt% Fe. The iron powder can be an iron sponge powder and/or a water atomised iron powder and/or a gas atomised iron powder and/or an iron filter dust and/or an iron sludge powder. For instance filter dust X-RFS40 from Höganäs AB, Sweden is a suitable powder.

The iron powder may partly or fully be replaced by an iron oxide powder, for instance but not limited to: powder consisting of FeO, Fe2O3, Fe3O4, FeO(OH, (Fe2O3*H20).

Preferably at least 90 % by weight, more preferably at least 99 % by weight, of the particles of the iron containing powder pass through a test sieve in accordance to ISO 3310-1:2000 having nominal aperture sizes of 125 µm, more preferably 45 µm, most preferably 20 µm.

### Carbonaceous powder

The carbonaceous powder is preferably chosen from the group of: sub-bituminous coals, bituminous coals, lignite, anthracite, coke, petroleum coke, and bio-carbons such as charcoal, or carbon containing powders processed from these resources. The carbonaceous powder may e.g. be soot, carbon black, activated carbon. The carbonaceous powder can also be a mixture of different carbonaceous powders.

Regarding the choice of carbonaceous powder, the reactivity of the carbon is preferably taken into consideration, since the productivity as well as the yield of Mo depends on this factor. A high reactivity is desired. In particular, due to the high vapour pressure of MoO3, it is desirable to have a carbonaceous powder that is reactive at lower temperatures (preferably < 700 °C). Thereby the intermediate reduction step MoO3 →MoO2 may be performed at lower temperatures so that losses of Mo due to the vaporisation of MoO3 can be minimised. For instance German brown coal (lignite) is normally reactive at lower temperatures than petroleum coke, and is hence suitable since it has comparably high reactivity at low temperatures. Also charcoal, bituminous and sub-bituminous coals can exhibit comparably high reactivity.

The amount of carbonaceous powder is determined by the amount of reducible oxides in the molybdenum oxide powder and the iron containing powder, as well as the maximum allowed carbon content in the pellets. Preferably the amount is chosen to stoichiometrically match or slightly exceed the amount of reducible metal oxides in the molybdenum oxide powder and the iron containing powder.

The amount of carbonaceous powder can be optimised by measuring the carbon levels and the oxygen levels in the produced pellets - increasing or decreasing the amount of carbonaceous powder to achieve desired levels of carbon and oxygen. Some oxides which may be present in the molybdenum oxide powder are difficult to reduce with carbon, for instance oxides of Si, Ca, Al, and Mg. Such oxides may e.g. be present if cruder grades of molybdenum trioxide are used, e.g. technical molybdenum trioxide. However, in many applications of steel metallurgy these oxides can be handled e.g. by removing them in the slag of steel melt, and they can therefore be allowed in the pellets. If lower amounts of these oxides and elements are desired, purer grades of molybdenum trioxide can be employed, e.g. grades that contains less or no amounts of.

It would also be possible to produce a pellet where the molybdenum trioxide is only partially reduced, e.g. a pellet that contains MoOₓ, where 0 < x ≤ 2.5, typically 1 ≤ x ≤ 2. Of course, when producing such pellets, the required amount of carbonaceous powder is less than the amount required when all reducible oxides are to be reduced. Such partially reduced molybdenum trioxide might be a cost efficient substitute to MoO3 or traditional FeMo into melt when considering price and/or yield of the Mo addition into melt. Typical such addition could be made e.g. into electrical arc furnace (EAF) and e.g. be a Mo addition into stainless steel, tool steel or speed steel.

Preferably at least 90 % by weight, more preferably at least 99 % by weight, of the particles of the carbonaceous powder pass through a test sieve in accordance to ISO 3310-1:2000 having nominal aperture sizes of 125 µm, more preferably 45 µm, most preferably 20 µm.

### Iron and molybdenum containing pellets

The iron and molybdenum containing pellets that can be produced by the suggested process consist of in weight%: 2-25 Fe, less than 25 O, less than 5 C, less than 15 of other elements besides O, C, Mo and Fe, and balance being at least 60 % by weight of Mo.

Preferably the iron content is 3-20 % by weight, more preferably 4-15 % by weight, most preferably 5-10 % by weight. The iron content in the pellets can be controlled by varying the relative proportions of the iron containing powder in relation to the molybdenum oxide powder.

The content of molybdenum is preferably controlled to be in the range of 60-95 % by weight. More preferably the content of Mo is in the range of 65-90 wt%, most preferably the content of Mo is in the range of 70-90 wt%. The molybdenum content in the pellets can be controlled by varying the relative proportions of the molybdenum oxide powder in relation to the iron containing powder. In the most preferred embodiment the molybdenum content is around 80 % by weight. If solid the melting point, of a ferromolybdenum having such high content of molybdenum, would be above 2100 °C. However, as shown in example 2 below the porous structure of the pellet provides for very quick dissolving even in a steel melt of 1550 °C.

Regarding the presence of carbon it should be less than 5 wt % as stated above. Preferably the content of C is less than 2 wt%, more preferably less than 0.5 wt%, even more preferred less than 0.1 wt%, and most preferably less than 0.05 wt%. Such pellets can e.g. be used when alloying low carbon steels. However, in some applications, for example in the production of high carbon steels, it may desirable to have a carbon content in the range of 1-5 % by weight.

Regarding the presence of oxygen it should be less than 25 wt% as stated above. Higher amounts of oxygen corresponds to a product where the molybdenum trioxide is only partially reduced, e.g. a pellet that contains MoOₓ, where 0 < x ≤ 2.5, typically 1 ≤ x ≤ 2.

For many applications, it is however preferred that the content of O is less than 10 wt% more preferably less than 8 wt%, even more preferred less than 6 wt%, most preferably less than 4 wt%, and that a minority of the oxygen content comes from molybdenum oxide that has not been reduced. Preferably essentially all of the molybdenum oxide is reduced to Mo. Thus the remaining oxygen content mainly comes from oxides in molybdenum oxide powder and the iron containing powder that are difficult to reduce, e.g. oxides of Si, Ca, Al, and Mg. Using purer grades of the molybdenum oxide powder, the iron containing powder, and the carbonaceous powder, the oxygen content of the pellets can, if desired, be made lower than 2% by weight. However, since many of these oxides that are difficult to reduce can be handled in the steel melt metallurgy, they may be allowed in the iron and molybdenum containing pellets

Preferably the total amount of other elements besides O, C, Mo and Fe is less than 10 % by weight, more preferably less than 7 % by weight. The amount of other elements is mainly controlled buy the purity of the molybdenum trioxide. However, the purity of the iron containing powder and the carbonaceous powder is of course also a factor. Using high purity grades of molybdenum trioxide, iron containing powder and the carbonaceous powder; the total amount of other elements besides O, C, Mo and Fe can, if desired, be kept lower than 1 % by weight. If present in the pellets, elements from the group of Si, Ca, Al, and Mg are mainly bound as oxides. For instance, in a steel melt, silicon bound as silicon oxides may be easier to handle than silicon that is dissolved in the lattice of the alloy.

Preferably the other elements in weight % are limited to:
max 2 N, preferably max 1 N;
max 0.5 S, preferably max 0.1 S;
max 2 Al, preferably max 1 Al;
max 1 Mg, preferably max 1 Mg;
max 1 Na, preferably max 1 Na;
max 4 Ca, preferably max 2 Ca;
max 6 Si, preferably max 3 Si;
max 1 K, preferably max 0.5 K;
max 1 Cu, preferably max 0.5 Cu;
max 1 Pb, preferably max 0.1 Pb;
max 1 W, preferably max 0.1 W;
max 1 V, preferably max 0.1 V;
and remaining elements is max 0.5 each, preferably max 0.1 each, more preferably max 0.05 each.

Preferably, if present, the elements of the group of Si, Ca, Al and Mg are to at least 50% by weight bound as oxides in the pellets, preferably at least 90 % by weight.

The nitrogen content mainly depends on the nitrogen levels in the atmosphere during heating, reduction and cooling of the pellets. By controlling the atmosphere in these steps the nitrogen content can be made lower than 0.5 wt%, preferably lower than 0.1 wt% and most preferably lower than 0.05 wt%.

The size of the pellet are preferably in the range of 3-30 mm, preferably 5-20 mm. Too large pellets prolongs the needed reduction time, and to small pellets are difficult to handle.

The pellet has typically a geometric density less than 4.0 g/cm3, preferably less than 3.5 g/cm3.

The shape of the pellet is typically spherical, spheroidal, or ellipsoidal. When handled, this form compared to the form a compressed briquettes reduces the risk of shredding. Furthermore the flow properties are better than that of briquettes.

### EXAMPLE 1

A mixture was prepared by mixing 3 % by weight of a fine grained iron powder (< 40 µm, >99 wt% Fe, X-RSF40 from Höganäs AB) with 84 %by weight of a technical grade molybdenum oxide (Mo > 57 wt%, < 40 µm) and 13 % by weight of a carbon powder (< 20 µm, Carbon Black). Water was added to the liquid and green pellets were produced in a disc pelletizer. The pellets had a water content of about 10 % by weight. The pellets were thereafter dried in room temperature to a moisture content of 2 wt%.

The green pellets were reduced in a batch furnace at a temperature of 1100 °C for a time period of 6 hours, in a 95 vol-% N2 and 5 vol-% H2 atmosphere. The pellets were thereafter allowed cool to a temperature around 100 °C before evacuating the atmosphere and removing them from the furnace. The result was pellets having a weight around 0.4 gram and a diameter around 6-7 mm. The average geometric density of the pellets was determined to be 2.6 g/cm3.

The pellets were ground to powder and the chemical composition of the powder was determined. The results are presented in table 1.

The oxygen content of the pellets mainly comes from oxides that are difficult to reduce e.g. oxides of Mg, Al, Si and Ca. Such oxides can be present in the technical grade molybdenum trioxide and are hard to reduce. Therefore, using purer grades of molybdenum trioxide the oxygen content could be made considerably lower. However, in many applications these oxides can be allowed in the pellets, e.g. in the steel melt they can be directed to the slag.

**Table 1 chemical composition of FeMo pellets**

| **Mo** | **Fe** | **C** | **S** | **O** | **N** | |
|---|---|---|---|---|---|---|
| 82.5 | 8.12 | 0.02 | 0.04 | 3.37 | 0.63 | |

| **Mg** | **Al** | **Si** | **K** | **Ca** | **Cu** | **Rem.** |
|---|---|---|---|---|---|---|
| 0.25 | 0.55 | 2.40 | 0.26 | 1.10 | 0.29 | 0.47 |

### EXAMPLE 2

Fig. 4 shows the dissolving rate for a traditional and reference grade of solid ferromolybdenum compared to an iron and molybdenum containing pellets of the invention, i.e. a novel ferromolybdenum grade. Pellets from the same batch as of example 1 was provided and hence having the composition as of table 1. As described in example 1 the geometric density of the pellets was determined to be 2.6 g/cm3.

The reference grade was 10 lumps of solid ferromolybdenum containing 70 % by weight of molybdenum, not more than 2 % impurities and the balance being iron. The size of each lump was around 10x50 mm.

The aim with the experiment was to evaluate if the iron and molybdenum containing pellets had a faster dissolving rate than traditional and commercially available ferromolybdenum.

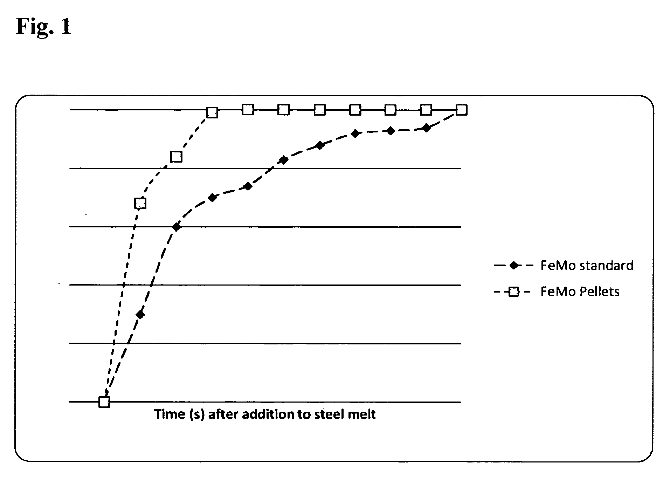

Two steel melts, a first and a second, were prepared and their compositions were analyzed. The target composition of the melts were 5.0 wt% Mo, 0.6 wt% C and bal. of Fe and the content of Mo was originally 0 wt% in both steel melts. The steel melts were both held at a temperature around 1550 °C during the experiment. To the first melt Mo was added in the form of the iron and molybdenum containing pellets, and to the second steel melt the lumps of the reference grade were added. The pellets and the reference grade were added in one batch respectively to their corresponding steel melts. A test sample was taken every 30 second from each steel melt to measure the Mo-content therein. Ten test samples were taken for each melt, and Fig. 1 shows how the content of Mo changes over time for each melt. As can be seen the content of Mo increases much quicker for the steel melt being alloyed by the pellets than for that of the steel melt being alloyed by the reference grade i.e. the dissolving rate for the pellets are higher than that of the reference grade, in spite that the molybdenum content was more than 10 wt% higher for the pellets.

## Claims

1. Process for producing iron and molybdenum containing pellets the process including the steps of:
a) mixing an iron containing powder, a molybdenum oxide powder, and a carbonaceous powder,
b) adding a liquid, preferably water, and optionally a binder to the mixture, and pelletizing to provide a plurality of green pellets;
c) drying the green pellets to reduce the moisture content to less than 10 % by weight;
d) optionally heat-treating the green pellets at a temperature in the range of 400-800 °C during at least 0.5 hours,
e) reducing the green pellets derived from step c) or d) at a temperature in the range of 800-1500 °C, preferably 800-1200 °C, during at least 0.5 hours, to produce iron and molybdenum containing pellets having geometric densities in the range of 2-5 g/cm3 and consisting of in weight %: 2-25 Fe, less than 10 O, less than 5 C, less than 10 of other elements besides Mo, Fe, C and O, and balance at least 60 % by weight of Mo.

2. A process according to claim 1 wherein
- the molybdenum oxide powder contains 50-80 %by weight of Mo, and having a particles size wherein at least 90 % by weight, more preferably at least 99 % by weight, of the particles of the molybdenum oxide powder pass through a test sieve in accordance to ISO 3310-1:2000 having nominal aperture sizes of 250 µm, more preferably 125 µm, most preferably 45 µm,
- the iron containing powder contains at least 80 % by weight of Fe, preferably at least 90 wt%, more preferably at least 95 wt%, most preferably at least 99% by weight, and having a particles size wherein at least 90 % by weight, more preferably at least 99 % by weight, of the particles of the iron containing powder pass through a test sieve in accordance to ISO 3310-1:2000 having nominal aperture sizes of 125 µm, more preferably 45 µm, most preferably 20 µm, and
- the carbonaceous powder having a particle size such that at least 90 % by weight, more preferably at least 99 % by weight of the particles pass through a test sieve in accordance to ISO 3310-1:2000 having nominal aperture sizes of 125 µm, more preferably 45 µm, most preferably 20 µm.

3. A process according to any one of claims 1-2, wherein the carbonaceous powder is chosen from the group of: sub-bituminous coals, bituminous coals, anthracite, lignite, coke, petroleum coke, and bio-carbons such as charcoal.

4. A process according to any one of claims 1-3, wherein a step f) cooling the reduced pellets in a non-oxidising atmosphere to a temperature below 200 °C, more preferably below 150 °C in an inert atmosphere.

5. A process according to any one of claims 1-4, wherein a step g) crushing or grinding the pellets to a iron and molybdenum containing powder, preferably said powder having particle size wherein at least 90 % by weight, more preferably at least 99 % by weight, of the particles pass through a test sieve in accordance to ISO 3310-1:2000 having nominal aperture sizes of 250 µm, more preferably 125 µm, most preferably 45 µm.

6. A process according to any one of claims 1-5, wherein the process further including the step h) providing cored wire including a metal sheet, and a core made of the molybdenum containing powder.

7. An iron and molybdenum containing pellet having a geometric density in the from 2.0 to less than 4.0 g/cm3 and consisting of in weight%:
2-25 Fe,
less than 25 O,
less than 5 C,
less than 15 of other elements besides O, C, Mo and Fe, and
balance at least 60 % by weight of Mo.

8. An iron and molybdenum containing pellet according to claim 7, wherein the pellet consisting of in weight%:
3-20 Fe, preferably 4-15 Fe, more preferably 5-10 Fe;
less than 10 O, preferably less than 8 O, more preferably less than 6 O, most preferably less than 4 O;
less than 2 C, preferably less than 0.5 C, more preferably less than 0.05 C;
less than 10 of other elements besides O, C, Mo and Fe, preferably less than 7 of other elements besides O, C, Mo and Fe, most preferably less than 1 of other elements besides O, C, MO and Fe, and
balance at least 65 % by weight of Mo.

9. An iron and molybdenum containing pellet according to claim 7 or 8 wherein the other elements in weight %: is limited to:
max 2 N, preferably max 1 N;
max 0.5 S, preferably max 0.1 S;
max 2 Al, preferably max 1 Al;
max 1 Mg, preferably max 1 Mg;
max 1 Na, preferably max 1 Na;
max 4 Ca, preferably max 2 Ca;
max 6 Si, preferably max 3 Si;
max 1 K, preferably max 0.5 K;
max 1 Cu, preferably max 0.5 Cu;
max 1 Pb, preferably max 0.1 Pb;
max 1 W, preferably max 0.1 W;
max 1 V, preferably max 0.1 V;
and remaining elements is max 0.5 each, preferably max 0.1 each, more preferably max 0.05 each.

10. An iron and molybdenum containing pellet according to any one of claims 7 - 9, wherein the pellet having a size in the range of 3-30 mm, preferably 5-20 mm.

11. An iron and molybdenum containing pellet according to any one of claims 7 -10, wherein the geometric density is at most 3.5 g/cm3.

12. An iron and molybdenum containing pellet according to any one of claims 7 -11, wherein any one of the elements chosen from the group of Si, Ca, Al, Mg is to at least 50% by weight bound as oxides in the pellets, preferably at least 90 % by weight.

## Patentansprüche

1. Verfahren zum Herstellen von Pellets, die Eisen und Molybdän enthalten, wobei das Verfahren die Schritte umfasst:
a) Mischen eines Pulvers, das Eisen enthält, eines Molybdän-Oxid-Pulvers, und eines kohlenstofflialtigen Pulvers;
b) Hinzufügen einer Flüssigkeit, bevorzugt Wasser, und optional eines Bindemittels zu der Mischung, und Pelletieren, um mehrere Grünpellets bereitzustellen;
c) Trocknen der Grünpellets, um den Feuchtigkeitsgehalt auf weniger als 10 Gewichtsprozent zu verringern;
d) optional Wärmebehandeln der Grünpellets bei einer Temperatur in dem Bereich von 400-800 °C für mindestens 0,5 Stunden;
e) Reduzieren der Grünpellets, die aus dem Schritt c) oder d) erhalten wurden, bei einer Temperatur in dem Bereich von 800-1500 °C, bevorzugt 800-1200 °C, für mindestens 0,5 Stunden, um Pellets zu erhalten, die Eisen und Molybdän enthalten, mit geometrischen Dichten in dem Bereich von 2-5 g/cm³ und im Wesentlichen bestehend aus dem Folgenden in Gewichtsprozent: 2-25 Fe, weniger als 10 O, weniger als 5 C, weniger als 10 von anderen Elementen neben Mo, Fe, C und O, und einem Rest von mindestens 60 Gewichtsprozent Mo.

2. Verfahren nach Anspruch 1, wobei
- das Molybdän-Oxid-Pulver 50-80 Gewichtsprozent Mo enthält, und eine Partikelgröße aufweist, wobei mindestens 90 Gewichtsprozent, bevorzugt mindestens 99 Gewichtsprozent, der Partikel des Molybdän-Oxid-Pulvers durch ein Prüfsieb gemäß ISO 3310-1:2000 mit Nenn-Öffnungsgrößen von 250 µm, bevorzugt 125 µm, am meisten bevorzugt 45 µm hindurchpassen;
- das Pulver, das Eisen enthält, 80 Gewichtsprozent Fe enthält, bevorzugt mindestens 90 Gewichtsprozent, noch mehr bevorzugt 95 Gewichtsprozent, am meisten bevorzugt mindestens 99 Gewichtsprozent, und eine Partikelgröße aufweist, wobei mindestens 90 Gewichtsprozent, bevorzugt mindestens 99 Gewichtsprozent, der Partikel des Pulvers, das Eisen enthält, durch ein Prüfsieb gemäß ISO 3310-1:2000 mit Nenn-Öffnungsgrößen von 125 µm, mehr bevorzugt 45 µm, am meisten bevorzugt 20 µm hindurchpassen; und
- das kohlenstoffhaltige Pulver eine Partikelgröße aufweist, so dass mindestens 90 Gewichtsprozent, mehr bevorzugt mindestens 99 Gewichtsprozent der Partikel durch ein Prüfsieb gemäß ISO 3310-1:2000 mit Nenn-Öffnungsgrößen von 125 µm, mehr bevorzugt 45 µm, am meisten bevorzugt 20 µm hindurchpassen.

3. Verfahren nach einem der Ansprüche 1-2, wobei das kohlenstoffhaltige Pulver ausgewählt ist aus der Gruppe von:
subbituminöse Kohlen, bituminöse Kohlen, Anthrazit, Lignit, Koks, Ölkoks, und Biokohlenstoffen so wie Holzkohle.

4. Verfahren nach einem der Ansprüche 1-3, wobei ein Schritt
f) Kühlen der reduzierten Pellets in einer nicht-oxidierenden Atmosphäre auf eine Temperatur unter 200 °C, bevorzugt unter 150 °C, in einer Schutzgasatmosphäre.

5. Verfahren nach einem der Ansprüche 1-4, wobei ein Schritt
g) Brechen oder Mahlen der Pellets zu einem Pulver, das Eisen und Molybdän enthält, wobei das Pulver bevorzugt eine Partikelgröße aufweist, wobei mindestens 90 Gewichtsprozent, bevorzugt mindestens 99 Gewichtsprozent der Partikel durch ein Prüfsieb gemäß ISO 3310-1:2000 mit Nenn-Öffnungsgrößen von 250 µm, mehr bevorzugt 125 µm, am meisten bevorzugt 45 µm hindurchpassen.

6. Verfahren nach einem der Ansprüche 1-5, wobei das Verfahren weiterhin den Schritt umfasst:
h) Bereitstellen von Kerndraht, einschließend ein Metallblech und einen Kern, der aus dem Pulver hergestellt ist, das Molybdän enthält.

7. Pellet, das Eisen und Molybdän enthält, mit einer geometrischen Dichte von 2,0 bis weniger als 4,0 g/cm³ und bestehend aus dem Folgenden in Gewichtsprozent:
2-25 Fe;
weniger als 25 O;
weniger als 5 C;
weniger als 15 von anderen Elementen neben O, C, Mo und Fe; und
einem Rest von mindestens 60 Gewichtsprozent Mo.

8. Pellet, das Eisen und Molybdän enthält, gemäß Anspruch 7, wobei das Pellet aus dem Folgenden in Gewichtsprozent besteht:
3-20 Fe, bevorzugt 4-15 Fe, mehr bevorzugt 5-10 Fe;
weniger als 10 O, bevorzugt weniger als 8 O, noch mehr bevorzugt weniger als 6 O, am meisten bevorzugt weniger als 4 O;
weniger als 2 C, bevorzugt weniger als 0,5 C, noch mehr bevorzugt weniger als 0,05 C;
weniger als 10 von anderen Elementen neben O, C, Mo und Fe; bevorzugt weniger als 7 von anderen Elementen neben O, C, Mo und Fe, am meisten bevorzugt weniger als 1 von anderen Elementen neben O, C, Mo und Fe; und
einem Rest von mindestens 65 Gewichtsprozent Mo.

9. Pellet, das Eisen und Molybdän enthält, gemäß Anspruch 7 oder 8, wobei die anderen Elemente in Gewichtsprozent beschränkt sind auf:
max 2 N, bevorzugt max 1 N;
max 0,5 S, bevorzugt max 0,1 S;
max 2 Al, bevorzugt max 1 Al;
max 1 Mg, bevorzugt max 1 Mg;
max 1 Na, bevorzugt max 1 Na;
max 4 Ca, bevorzugt max 2 Ca;
max 6 Si, bevorzugt max 3 Si;
max 1 K, bevorzugt max 0,5 K;
max 1 Cu, bevorzugt max 0,5 Cu;
max 1 Pb, bevorzugt max 0,1 Pb;
max 1 W, bevorzugt max 0,1 W;
max 1 V, bevorzugt max 0,1 V;
und verbleibende Elemente sind jeweils max 0,5, bevorzugt jeweils max 0,1, am meisten bevorzugt jeweils max 0,05.

10. Pellet, das Eisen und Molybdän enthält, gemäß einem der Ansprüche 7-9, wobei das Pellet eine Größe in dem Bereich von 3-30 mm, bevorzugt 5-20 mm aufweist.

11. Pellet, das Eisen und Molybdän enthält, gemäß einem der Ansprüche 7-10, wobei die geometrische Dichte höchstens 3,5 g/cm³ beträgt.

12. Pellet, das Eisen und Molybdän enthält, gemäß einem der Ansprüche 7-11, wobei irgendeines der Elemente aus der Gruppe Si, Ca, Al, Mg zu mindestens 50 Gewichtsprozent als Oxide in den Pellets gebunden ist, bevorzugt mindestens zu 90 Gewichtsprozent.

## Revendications

1. Procédé de production de fer et de molybdène contenant des granulés, le procédé comprenant les étapes consistant à :
a) mélanger d'une poudre contenant du fer, une poudre d'oxyde de molybdène, et d'une poudre carbonée,
b) ajouter un liquide, de préférence de l'eau, et optionnellement un liant, dans le mélange, et réaliser une granulation pour fournir une pluralité de granulés crus ;
c) sécher les granulés crus pour réduire la teneur en humilité à moins de 10% en poids ;
d) optionnellement, traiter thermiquement les granulés crus une température située dans l'intervalle allant de 400 à 800° C pendant au moins 0,5 heure,
e) réduire les granulés crus issues de l'étape c) ou d) à une température située dans l'intervalle allant de 800 à 1500° C, de préférence de 800 à 1200° C, pendant au moins 0,5 heure, pour produire des granulés contenant du fer et du molybdène ayant des densités géométriques situées dans l'intervalle allant de 2-5 g/cm3 et constitués, en % en poids : de 2 à 25 de Fe, moins de 10 d'O, moins de 5 de C, moins de 10 d'autres éléments autres que Mo, Fe, C et O, et pour le reste d'au moins 60% en poids de Mo.

2. Un procédé selon la revendication 1, dans lequel
- la poudre d'oxyde de molybdène contient de 50 à 80% en poids de Mo, et a une taille de particules telle qu'au moins 90% en poids, de plus grande préférence au moins 99% en poids, des particules de poudre d'oxyde de molybdène passent à travers un tamis d'essai conforme à la norme ISO 3310-1:2000 ayant des tailles d'ouverture nominales de 250 µm, de préférence de 125 µm, de manière la plus préférée de 45 µm,
- la poudre contenant le fer contient au moins 80% en poids de Fe, de préférence au moins 90% en poids, de manière encore préférée au moins 95% en poids, le plus préférablement au moins 99% en poids, et ayant une taille de particules telle qu'au moins 90% en poids, de préférence au moins 99% en poids, des particules de la poudre contenant le fer passent à travers un tamis d'essai conforme à la norme ISO 3310-1:2000 ayant des tailles d'ouverture nominale de 125 µm, de préférence de 45 µm, de manière la plus préférée de 20 µm, et
- la poudre carbonée a une taille de particules telle qu'au moins 90% en poids, de préférence au moins 99% en poids, des particules passent à travers un tamis d'essai conforme à la norme ISO 3310-1:2000 ayant des tailles d'ouvertures nominales de 125 µm, de préférence de 45 µm, de manière la plus préférée de 20 µm.

3. Un procédé selon l'une quelconque des revendications 1 à 2, dans lequel la poudre carbonée est choisie dans le groupe constitué de : charbons sous-bitumineux, charbons bitumineux, anthracite, lignite, coke, coke de pétrole, et bio-carbures tels que le charbon de bois.

4. Un procédé selon l'une quelconque des revendications 1 à 3, dans lequel est mise en oeuvre une étape f) de refroidissement des granulés réduits dans une atmosphère non oxydante à une température inférieure à 200° C, de préférence inférieure à 150° C, dans une atmosphère inerte.

5. Un procédé selon l'une quelconque des revendications 1 à 4, dans lequel est mise en oeuvre une étape g) de concassage ou de broyage des granulés en une poudre contenant du fer et du molybdène, ladite poudre ayant de préférence une taille de particules telle qu'au moins 90% en poids, de préférence au moins 99% en poids, des particules passent à travers un tamis d'essai conforme à la norme ISO 3310-1:2000 ayant des tailles d'ouvertures nominales de 250 µm, de préférence de 125 µm, de manière la plus préférée de 45 µm.

6. Un procédé selon l'une quelconque des revendications 1 à 5, dans lequel le procédé comprend en outre l'étape h) consistant à réaliser un fil à âme comprenant une feuille de métal, et une âme constituée de la poudre contenant du molybdène.

7. Un granulé contenant du fer et du molybdène ayant une densité géométrique allant de 2,0 à moins de 4,0 g/cm3 et se composant, en % en poids, de :
2 à 25 de Fe,
Moins de 25 d'O,
moins de 5 de C,
moins de 15 d'éléments autres que O, C, Mo et Fe, et
pour le reste, d'au moins 60% en poids de Mo.

8. Un granulé contenant du fer et du molybdène selon la revendication 7, dans lequel le granulé est constitué, en % en poids, de :
3 à 20 de Fe, de préférence 4 à 15 de Fe, de manière la plus préférée, de 5 à 10 de Fe ;
moins de 10 d'O, de préférence moins de 8 d'O, plus préférablement moins de 6 d'O, de manière la plus préférée moins de 4 d'O ;
moins de 2 de C, de préférence moins de 0,5 de C, plus préférablement moins de 0,05 de C ;
moins de 10 d'éléments autres que O, C, Mo et Fe, de préférence moins de 7 d'éléments autres que O, C, Mo et Fe, le plus préférablement moins de 1 d'éléments autres que O, C, Mo et Fe, et
pour le reste, d'au moins 65% en poids de Mo.

9. Un granulé contenant du fer et du molybdène selon la revendication 7 ou la revendication 8, dans lequel les autres éléments, en % en poids, sont limités à :
max 2 de N, de préférence au maximum 1 de N ;
max 0,5 de S, de préférence au maximum 0,1 de S ;
max 2 d'Al, de préférence au maximum 1 d'Al ;
max 1 de Mg, de préférence au maximum 1 de Mg ;
max 1 de Na, de préférence au maximum 1 de Na ;
max 4 de Ca, de préférence au maximum 2 de Ca ;
max 6 de Si, de préférence au maximum 3 de Si ;
max 1 de K, de préférence au maximum 0,5 de K ;
max 1 de Cu, de préférence au maximum 0,5 de Cu ;
max 1 de Pb, de préférence au maximum 0,1 de Pb ;
max 1 de W, de préférence au maximum 0,1 de W ;
max 1 de V, de préférence au maximum 0,1 de V ;
et les éléments restants sont au maximum de 0,5 chacun, de préférence au maximum de 0,1 chacun, de manière encore préférée au maximum de 0,05 chacun.

10. Un granulé contenant du fer et du molybdène selon l'une quelconque des revendications 7 à 9, dans lequel le granulé a une taille située dans l'intervalle allant de 3 à 30 mm, de préférence de 5 à 20 mm.

11. Un granulé contenant du fer et du molybdène selon l'une quelconque des revendications 7 à 10, dans lequel la densité géométrique est au plus de 3,5 g/cm3.

12. Un granulé contenant du fer et du molybdène selon l'une quelconque des revendications 7 à 11, dans lequel l'un quelconque des éléments choisis dans le groupe formé par Si, Ca, Al, Mg est à au moins 50% en poids lié sous forme d'oxydes dans les granulés, de préférence à au moins 90% en poids.
